# EUROPEAN PATENT SPECIFICATION

(11) **EP 3 575 158 B1**
(45) Date of publication and mention of the grant of the patent: **09.12.2020**
(21) Application number: 18175077.9
(22) Date of filing: 30.05.2018
(51) Int. Cl.: B60R 21/231, B60R 21/233, B60R 21/2338

(54) **AN AIR-BAG**
AIRBAG
COUSSIN DE SÉCURITÉ GONFLABLE

(43) Date of publication of application: 04.12.2019
(73) Proprietor: Autoliv Development AB, 447 83 Vårgårda (SE)
(72) Inventor: Larsson, Karl-Johan, 53495 Vara (SE); Pipkorn, Bengt, 433 70 Sävedalen (SE); Sandinge, Pär, 44195 Alingsås (SE)
(74) Representative: Forresters IP LLP

(56) References cited:
- DE-A1-102007 003 863
- DE-A1-102011 084 093

## Description

### Description of Invention

In some modern vehicles an air-bag is provided between the two front seats (i.e. the driver seat and the front passenger seat). An air-bag of this type is sometimes known as a frontal centre cushion (FCC) or frontal centre air-bag (FCA).

One aim of an FCA is to assist in keeping the driver of the vehicle (and/or an occupant of the front passenger seat) in the correct position during a side impact.

There are several known designs of FCA, for instance, as can be seen in US 2013/0113193 and US 2013/007014.

DE102007003863 discloses an arrangement having a gas bag including a retaining region for a portion of a gas generator unit. A chamber is assigned to a thorax region of a passenger sitting in a vehicle seat, and another chamber is assigned to a back region of the passenger. A third chamber is arranged between the chambers, and is assigned to an abdomen region of the passenger. The third chamber is separated from the chambers by partitions. The third chamber is supplied with a gas through an overflow opening in the partition for the chamber.

It is an object of the present invention to provide an improved air-bag of this type.

Accordingly, one aspect of the present provides an air-bag to be mounted in a vehicle, the air-bag comprising: a top side, which will be at the top of the air-bag when it is mounted in a vehicle; a bottom side; a face side, extending between the top side and the bottom side; a rear side, substantially opposite the face side; a body part, defined between the front face side and the rear face side, and positioned adjacent or close to the bottom side; and a head part, defined between the front face side and the rear face side and adjacent to or close to the top side, wherein: the body part is divided into at least two chambers by a first tether arrangement which extends between the front face side and the rear side and is connected both to the front face side and the rear side; gas may flow between the two or more chambers; gas may flow between the head part and the body part; and when the air-bag is in an inflated state, the front face side extends further in a lateral first direction, which is generally the direction in which the face side faces, in the region of the head part than in the region of the body part.

Advantageously, the first tether arrangement extends in a direction which passes from the bottom side to the top side.

Preferably, the first tether arrangement extends over substantially the entire height of the body part, between the bottom side and the top side.

Conveniently, the first tether arrangement comprises a sheet of material.

Advantageously, the sheet of material has one or more vent apertures formed therethrough.

Preferably, the air-bag comprises two first tether arrangements, spaced apart from each other, to divide the body part into three chambers, comprising a middle chamber, and preferably wherein the two first tether arrangements are substantially parallel with each other.

Conveniently, the air-bag further comprises a second tether arrangement, which extends between the face side and the rear side and is connected both to the face side and the rear side, the second tether arrangement being positioned between the body part and the head part.

Advantageously, the air-bag comprises at least two second tether arrangements, which are spaced apart from each other.

Preferably, the or each second tether arrangement comprises a sheet of material.

Conveniently, the second tether arrangement extends in a direction which is substantially parallel with the bottom side.

Advantageously, the or a first tether arrangement and the or a second tether arrangement are formed from the same tether element.

Preferably, the air-bag further comprises first and second side surfaces, which are attached to the top side, the bottom side, the face side and the rear side.

Another aspect of the present invention provides a vehicle incorporating an air-bag according to any preceding claim.

Conveniently, the air-bag is arranged to inflate to a position between two adjacent seats of the vehicle.

Advantageously, the air-bag is arranged to inflate on a central console between two adjacent seats, and wherein the airbag, when inflated, further comprises a skirt portion which extends to cover a part of the central console that faces towards an occupant of one of the seats.

In order that the invention may be more readily understood, embodiments therefore are now described, by way of example, with reference to the accompanying drawings, in which:
Figures 1 and 2 show an air-bag embodying the present invention;
Figures 3 and 4 show tether elements suitable for use with the present invention;
Figure 5 shows a further view of the air-bag of figures 1 and 2, with the locations of the tether elements of figures 3 and 4 indicated;
Figures 6a and 6b show where the air-bag may inflate in a vehicle in accordance with the present invention;
Figures 7 and 8 are side views of the air-bag of figures 1 and 2;
Figure 9 is a side view of a further air-bag embodying the present invention;
Figure 10 shows another air-bag embodying the present invention; and
Figure 11 shows a further air-bag embodying the present invention.

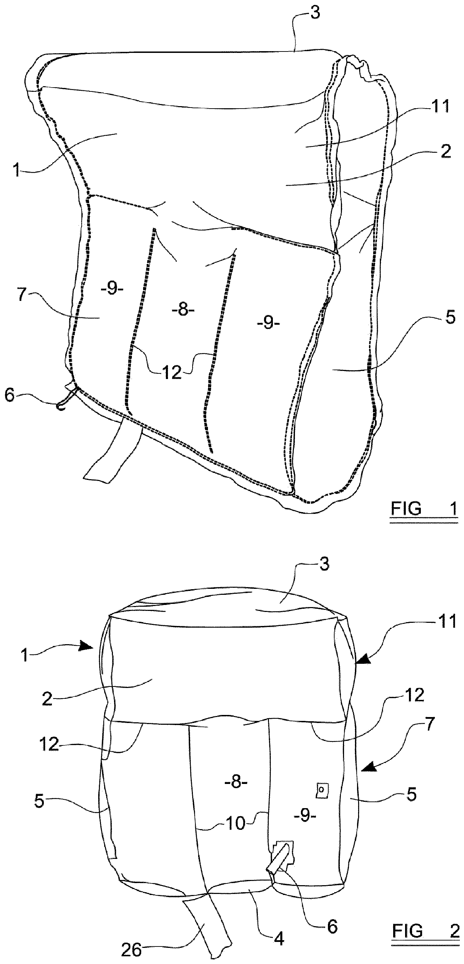

Referring firstly to figures 1 and 2, an air-bag 1 embodying the present invention is shown.

The air-bag 1 is intended to be positioned, in use, between the two front seats of a vehicle. The air-bag 1 is primarily intended to protect the occupant of one of the two front seats of the vehicle. It is expected that, in most applications, the air-bag 1 will be provided to protect the driver of the vehicle, but it is also envisaged that the air-bag 1 may be arranged to protect an occupant of the front passenger seat of the vehicle.

The air-bag 1 has a front face 2 which, in use, is intended to face towards the seat containing the occupant which the air-bag 1 is primarily intended to protect.

The air-bag 1 also has a rear face (not visible in figures 1 and 2), which is substantially opposite the front face 2 and is intended, in use, to face generally away from the individual that the air-bag 1 is intended to protect.

The air-bag 1 also has a top surface 3, a bottom surface 4, and first and second side surfaces 5. These surfaces may be formed from separate sheets of material. However, in preferred embodiments the front, rear, top and bottom surfaces 2, 3, 4 can be formed from a single, continuous sheet of material.

The air-bag 1 has a substantially enclosed interior, and is inflatable. The air-bag 1 has a gas inlet port 6, through which gas may be introduced into the interior of the air-bag 1 to inflate the air-bag 1. The gas inlet port 6 is shown in two different, alternative locations in figures 1 and 2, but in both figures the gas inlet port 6 is located near or at the bottom of the air-bag 1. The gas inlet port may be provided in any suitable location, however.

The air-bag 1 has a depth defined between the front face 2 and the rear face. This depth is, in part, determined by the width of the side surfaces 5. The width and height of the front face 2 and rear surface are, in the embodiment shown, greater than the depth of the side surfaces 5. The length and width of the air-bag 1 are therefore greater than its depth.

In the preferred embodiments, the front face 2 of the air-bag 1 is generally rectangular, and it is also preferred that the front face 2 is substantially square, i.e. having a height which is not significantly different from its width. This is not essential, however, and the ratio between the height and width of the front face 2 of the air-bag 1 can be of any suitable value.

The air-bag 1 comprises two main parts.

Firstly, the air-bag 1 comprises a body part 7, which in the example shown is positioned at the lower part of the air-bag 1, i.e. the part of the air-bag 1 which is adjacent to the bottom surface 4 thereof.

The body part 7 is divided into three chambers, namely a central chamber 8 and first and second side chambers 9. In the example shown, the chambers 8, 9 each extend to the bottom surface 4 of the air-bag 1, and the divisions between the chambers 8, 9 extend in a direction which is generally perpendicular to the bottom surface 4. When the air-bag 1 is in its intended orientation, as shown in figures 1 and 2, these divisions are generally vertical.

Respective first tether arrangements 10 separate the chambers 8, 9 from each other.

Each first tether arrangement 10 is positioned within the air-bag 1, and connects the front surface 2 thereof to the rear surface thereof. Each first tether arrangement 10 therefore limits the maximum distance between the front and rear surfaces.

Each first tether arrangement 10 is preferably substantially vertically arranged, i.e. extends in a direction which passes from the bottom surface 4 towards the top surface 3. Each first tether arrangement 10 may be connected to the front and rear faces of the air-bag 1 at several locations, with these locations being spaced apart from one another in a generally vertical direction. Alternatively, each first tether arrangement 10 may be connected to the front and rear faces of the air-bag 1 along an extended line of connection, with the extended line of connection being arranged vertically or substantially vertically.

In the preferred embodiments of the invention, gas can flow through or past each first tether arrangement 10, so the three chambers 8, 9 of the body part 7 are in fluid communication with each other. This means that the body part 7 can be inflated as one cushion, without the three chambers 8, 9 thereof needing to be inflated individually.

In preferred embodiments, each of the first tether arrangements 10 takes the form of a sheet of material, which is connected both to the front face 2 and to the rear face of the air-bag 1. The sheet of material is also preferably attached to the bottom surface 4 of the air-bag 1, as this will help to maintain the shape and overall stability of the air-bag 1.

The air-bag 1 also includes a head part 11, which is, in the embodiment shown, positioned substantially directly above the body part 7.

The head part 11 preferably comprises a single inflatable chamber, i.e. without any internal tethers or subdivisions, although in other embodiments there may be one or more tethers or subdivisions within the head part 11.

The head part 11 is bounded at its other end (i.e. the end furthest from the body part 7) by the top surface 3 of the air-bag 1. In the embodiment shown, the side surfaces 5 extend continuously from the bottom surface 4 to the top surface 3, and thus form the sides of the head part 11 (as well as the sides of the body part 7).

In the embodiment shown, second tether arrangements 12 are positioned between the upper end of each of the two side chambers 9 of the body part 7, and the head part 11. Once again, each of these second tether arrangements 12 connects the front and rear faces of the air-bag 1 to each other, thus limiting the distance between the front and rear surfaces. In preferred embodiments, gas can flow through or past each of the second tether arrangements 12, so the two side chambers 9 of the body part 7 are in fluid communication with the head part 10.

In the embodiment shown, no tether arrangement is provided between the central chamber 8 of the body part 7 and the head part 11. In other embodiments such a tether arrangement may be provided. However, it is preferred that no tether arrangement is provided between the central chamber 8 of the body part 7 and the head part 11, because it is advantageous for gas to be able to flow freely and rapidly between the central chamber 8 and the head part 11, as will become clear from the discussion below.

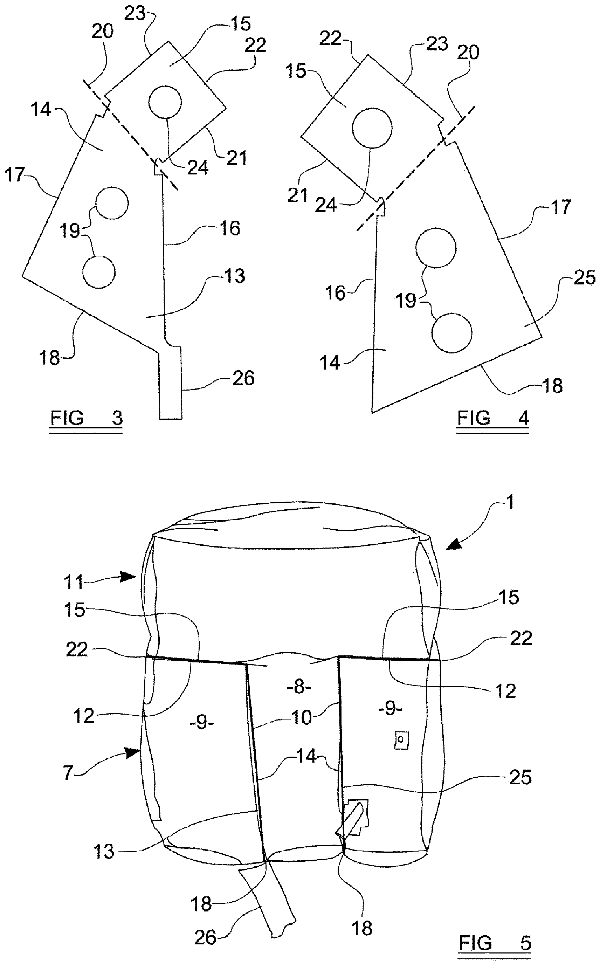

Figure 3 shows a tether arrangement in the form of a sheet of material 13 which, in the finished air-bag 1, provides one first tether arrangement 10 and one second tether arrangements 12. In the view shown in figures 1 and 2, this sheet of material 13 will be positioned on the left-hand side of the air-bag 1.

The sheet of material 13 is preferably formed from fabric, but may be formed from any other suitable material. In some embodiments, the sheet of material 13 may be formed from the same fabric as the fabric from which the main panels of the air-bag 1 are formed.

The sheet of material 13 comprises a lower region 14 which, in use, will form the first tether arrangement 10, that lies within the body part 7 of the air-bag 1. The sheet of material 13 further comprises an upper region 15 which, in use, will form the second arrangement 12 that is positioned between the body part 7 and the head part 11 of the air-bag 1.

The lower part 14 comprises a front edge 16 which, in use, will be attached to the front face 2 of the air-bag 1. The lower part 14 further comprises a rear edge 17 which, in use, will be attached to the rear face of the air-bag 1.

The sheet of material 13 further comprises a lower edge 18 which, in use, will be attached to the lower face 4 of the air-bag 1.

The lower part 14 has first and second vent apertures 19 formed therethrough. As discussed above, in preferred embodiments air may flow through or past the first and second tether arrangements 10, 12. While the fabric from which the sheet of material 13 is formed may have a reasonable degree of gas permeability, it is preferred to have one or more vent apertures 19 formed through the tether arrangements 10, 12 to allow rapid flow of gas past or through the tether arrangements 10, 12.

In preferred embodiments, the front, rear and bottom edges 16, 17, 18 of the sheet of material 13 will be attached to the respective panels of the air-bag 1 through sewing. However, any other suitable attachment method may be employed.

A fold line 20 is shown in figure 3, and the sheet of material 13 will, in use, be folded through around 90 degrees about this fold line 20. The upper region 15 will therefore be deflected through a right-angle or substantially a right-angle, with respect to the lower region 14.

The upper region 15 has a front edge 21, a side edge 22 and a rear edge 23. In use, the front edge 21 will be attached at the front panel 2, the side edge 22 will be attached to the side panel 5, and the rear edge 23 will be attached to the rear panel. Once again, these edges 21, 22, 23 will be attached to the respective panels by sewing or any other suitable means.

The top part 15 has a vent aperture 24 formed therethrough, once again to allow gas to flow readily therepast.

Figure 5 gives a further view of the air-bag shown in figure 2. On this image, the locations of the lower and upper parts, 14, 15 of the sheet of material 13 are indicated schematically. It can be seen that the lower part of the sheet of material 13 forms the first tether arrangement 10 between two chambers 8, 9 of the body part 7 of the air-bag 1, and the upper part 15 of the sheet of material 13 forms a second tether arrangement 12 between the body part 7 and the head part 11.

Figure 4 shows a further sheet of material 25, which is generally a mirror image of the sheet of material 13 shown in figure 3. Like parts of this sheet of material 25 are labelled with the same reference numerals as appear in figure 3.

Once again, the sheet of material 25 shown in figure 4 is folded around the fold line 20, and positioned within the air-bag 1 so that, as with the sheet of material of figure 13, the lower part 14 thereof forms a first tether arrangement 10 between two chambers 8, 9 in the body part 7 of the air-bag 1, and the upper part 15 thereof forms a second tether arrangement 12 between the body part 7 and the head part 11.

Figure 3 also shows an external tether 26, which protrudes from the point where the front and bottom edges 16, 18 of the sheet of material 13 meet. This external tether 26 comprises a strip of material which will protrude from the bottom side of the finished air-bag, and can be seen in figures 2 and 5. In use, this external tether 26 will be used to attach the air-bag 1 to an external object. This will help to maintain the position of the air-bag 1 both during and after inflation.

The external tether 26 could be an extension of the sheet of material 13, as shown in figure 3, or may be formed as a separate external tether, for instance as shown in figure 5.

The external tether 26 may be absent in other embodiments. Alternatively, the external tether may be positioned in a different location, or more than one external tether may be provided.

The skilled reader will understand how the sheets of material 13, 25 shown in figures 3 and 4 may be installed within the air-bag 1 to divide the air-bag 1 into the various chambers and parts discussed above, in a straightforward and advantageous manner. Separate sheets of material may also be provided to form the first tether arrangement 10 and the second tether arrangement. Each tether arrangement 10, 12 may be formed from two or more separate sheets of material. However, there are other ways in which these tether arrangements 10, 12 may be formed. For instance, one or both of the sheet of material 13, 25 may be replaced by a series of individual yarn-like tethers, which are spaced apart from one another, each of which attaches the front surface 2 of the air-bag 1 of the rear surface. The skilled person will appreciate yet further ways in which the tether arrangements may be provided.

In preferred embodiments of the invention, the air-bag 1 is initially mounted in a vehicle

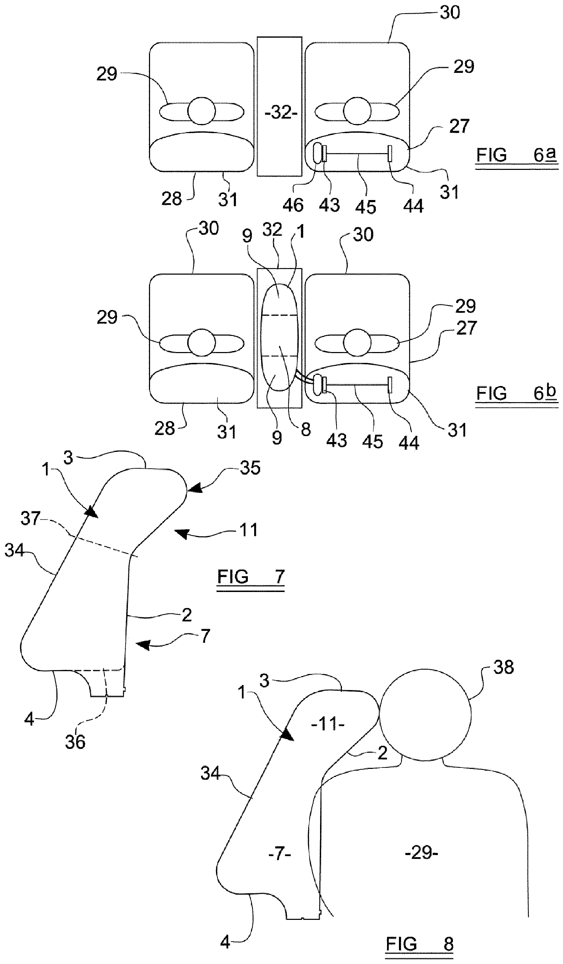

Figures 6a and 6b show schematically a position in which the air-bag 1 may inflate, during use. Figure 6a shows first and second vehicle seats 27, 28. The seat indicated by reference numeral 27 is, in this view, the driver's seat (in this example, the vehicle is a right-hand drive vehicle). Seat occupants 29 are shown schematically in both seats 27, 28. Each seat 27, 28 comprises a squab 30 and back rest 31. A central console 32 is shown schematically between the seats 27, 28.

Parts of the frame of the right-hand seat 27 are shown. The frame comprises left and right side beams 43, 44, with a supporting mesh 45 extending between the beams 43, 44. The air-bag is contained within a housing 46, which is attached to the outer side of the left side beam 43, within the fabric or other material which covers the seat 27. The housing 46 is therefore hidden from view in normal use, prior to inflation.

When the air-bag 1 is triggered, gas is introduced rapidly into the interior of the air-bag 1 from an inflator (discussed in more detail below). As the air-bag expands it will break through the fabric (or other substance) forming the outer skin of the seat 27. One or more seams or lines of weakness may be provided in the seat 27 to ensure that the air-bag 1 can break though, and that it does so in the correct place.

The air-bag 1 is positioned, and set at an appropriate height on the seat 27, so that it inflates substantially directly on top of the central console 32, adjacent the occupant 29 of the right-hand-seat 27, as shown in figure 6b. This occupant 29 is the individual that the air-bag 1 is primarily intended to protect in the event of a side impact.

The three chambers 8, 9 of the body part 7 of the air-bag 1 are schematically shown in figure 6b. It can be seen that the middle chamber 8 is generally aligned with the shoulder 33 of the occupant 29 of the right-hand-seat 27. The mounting of the air-bag 1 in the seat 27 means that the air-bag 1 will still inflate in alignment with the shoulder 33 of the occupant 29, regardless of the position in which the seat is set in the forward/backward direction.

Figure 7 shows a side view of the air-bag 1 in an inflated state. In this view the front surface 2 points to the right, and the rear face 34 points to the left. In this image, as the skilled reader will understand, the individual to be protected by the air-bag 1 will be positioned to the right of the air-bag 1.

It can be seen from figure 7 that the front face 2, in the body part 7 of the air-bag 1, is arranged to be generally vertical. However, in the head part 11, the front face 2 protrudes substantially further towards the occupant 29. In further embodiments of the invention, a region 35 of the front face 2 of the head part 11 which protrudes furthest in a lateral direction towards the occupant protrudes in this direction further than the front face 2 of the body part 7 by at least around 5 to 20 centimetres.

The underside of the air-bag 1, that will rest on the top surface of the central console, is indicated schematically by reference numeral 36. As can be seen from figure 7, the underside 36 of the air-bag 1 is relatively wide, to provide a broad base on which the air-bag 1 may rest, thus increasing the stability of the air-bag 1. The rear face 34 of the air-bag 1 is inclined, to allow the air-bag 1 to become wider towards its bottom face 4.

In the view shown in figure 7, the division between the body part 7 and the head part 11 is shown schematically by reference numeral 37.

The sequence of events following a side impact will now be described. In the discussion below references to a seat occupant or individual should be understood as referring to the individual that the air-bag 1 is primarily intended to protect, e.g. the occupant 29 of the right-hand-seat 27 in figure 6.

When a side impact occurs, this impact will be detected by one or more sensors of the vehicle, and an inflation signal will be generated by a processor of the vehicle, causing the inflation of the air-bag 1 to be triggered. During the impact, the individual 29 will be thrown sideways relative to the air-bag 1, i.e. in a direction which is generally perpendicular to the normal forward direction of travel of the vehicle. The occupant 29 is likely to be thrown towards the centre of the vehicle, i.e. towards the air-bag 1.

With reference to figure 8, as the occupant contacts the air-bag 1, the occupant's shoulder 33 will make contact with the central chamber 8 of the body part 7 of the air-bag 1. The occupant's shoulder 33 will compress this middle chamber 8, driving some of the air out of this middle chamber 8. Air from the middle chamber 8 will be driven into the two side chambers 9 of body part 7, and into the head part 11. The skilled reader will therefore understand that the middle chamber 8 may be compressed without substantially driving the air-bag 1 as a whole in a lateral direction.

It will also be understood that the compression of the central chamber 8 by the occupant's shoulder 33 will have the effect of additionally inflating the two side chambers 9 of the body part 7 and the head part 11, as gas from the central chamber 8 is driven into these chambers.

One effect of this will be that the two side chambers 9 will now be positioned in front of, and behind, the shoulder 33 of the occupant 29, respectively. This will help to stabilise the position of the occupant 29 in the longitudinal direction, i.e. generally parallel with the normal forward direction of travel of the vehicle.

In addition, as the occupant 29 continues to travel laterally with respect to the vehicle, the occupant's head 38 will contact the head part 11 of the air-bag 1, and the air-bag 1 will therefore provide support and cushioning both to the body and to the head 38 of the occupant 29.

It is important to note that, as the occupant's shoulder 33 first contacts the middle chamber 8 of the body part 7, due to the positioning of the first and second tether arrangements 10, 12, as the middle chamber 8 is compressed, the head part 11 of the air-bag 1 will not be substantially driven away from the occupant 29. This means that the head part 11 will remain substantially in the intended position, and will provide appropriate support and cushioning to the occupant's head 38. This is in contrast to previous designs of air-bag, in which the occupant's shoulder is likely to contact the air-bag first, and drive the air-bag as a whole, including the head part, away from the occupant, so that the head part does not provide correct support and cushioning to the head of the occupant.

The fact that the head part 11 of the air-bag 1 protrudes further towards the occupant than the body part 7 also means that the shoulder 33 and head 38 of the occupant 29 can be cushioned and supported at the same time. As the skilled reader will understand, the laterally-protruding head portion 11 will protrude over the top of the shoulder 33 of the occupant 29 to contact the occupant's head 38.

Figure 8 schematically shows this situation, as the occupant's head 38 contacts the air-bag 1 during a side impact. As can be seen in this figure, the occupant's shoulder 33 has pressed into the central chamber 8 of the body part 7, compressing this chamber 8 without substantially deflecting the remainder of the air-bag 1.

The skilled reader will understand that the air-bag shown in figures 1 to 8 will be very effective in protecting an occupant during a side impact. Where both of the front seats of a vehicle are occupied, the air-bag 1 will also prevent the occupants, and in particular the occupants' heads, from colliding during a side impact.

The shape of the side surfaces 5 is important in forming the advantageous shape of the air-bag 1, as can be seen (for example) in figure 7. The sheet(s) of material forming the front, rear, top and bottom surfaces can be attached to the edges of the side surfaces, and (along with the/any internal tethers) this will give the air-bag the desired shape. As the skilled reader will understand, the side surfaces may have a shape defining a body portion and a head portion.

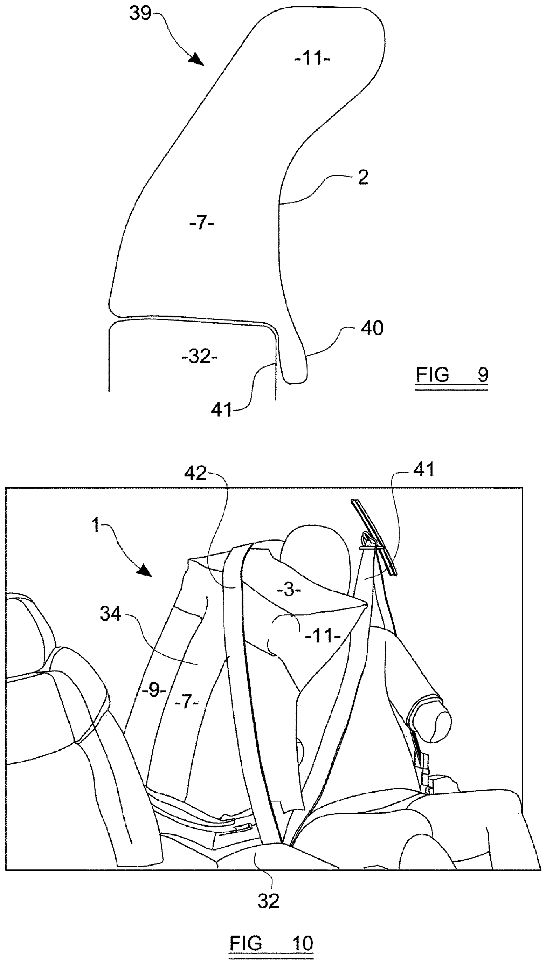

Figure 9 shows a further air-bag 39 embodying the present invention. The air-bag 39 shares most of its features with the air-bag 1 described above, and is shown inflated on a central console 32.

The air-bag 39 includes a skirt portion 40, which takes the form of a downwardly-extending region on the front side of the air-bag 1, which extends across all or some of the width of the air-bag 1. The air-bag 1 preferably has a bottom surface 4, which in use may rest on the central console, or on another surface, to support the air-bag 1 during and after inflation, and the skirt portion 40 preferably extends downwardly beyond this bottom surface 4, i.e. lies further from the top surface 3 than the bottom surface 4. The skirt portion 40 protrudes downwardly from the body part 7 of the air-bag 39, and covers at least a part of a side surface 41 of the central console 32. This skirt portion 40 provides an inflatable region over the region of the central console 32 that is closest to the occupant, and will thus provide additional cushioning between the occupant and the central console 32. This is effective for positioning the air-bag 1 correctly with respect to the central console 32, as well as for providing additional lateral restraint to the occupant.

The skilled reader will appreciate how the skirt portion 40 may be formed. For instance, the side panels 5 of the air-bag may be formed to include a region corresponding in shape to the skirt portion 40.

Figure 10 shows a further arrangement including the air-bag 1 described above. In this embodiment, a restraint belt 42 is provided to hold the air-bag 1 in place following inflation. As can be seen in figure 10, the restraint belt 42 is attached to the central console 32 and extends around the rear surface 34 and top surface 3 of the air-bag 1. The restraint belt 42 is attached at its other end to a part of the seat frame (not shown).

It should be noted that this restraint belt 42 is distinct from the passenger safety belt 41, which is also shown in figure 10.

In these embodiments, it is envisaged that the restraint belt 42 may be packaged within an air-bag housing along with the air-bag 1, and will be moved into position through the inflation of the air-bag 1.

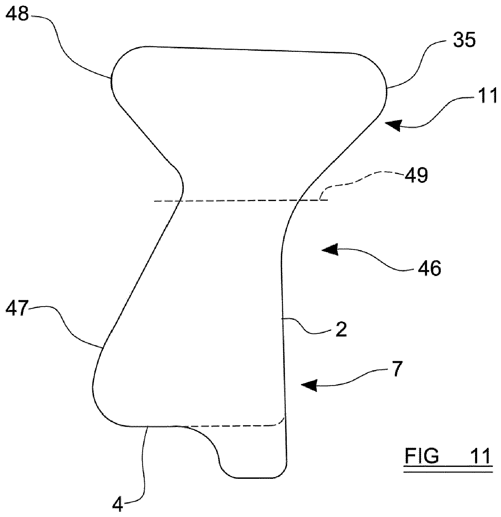

Figure 11 shows an alternative air-bag 46, which could be used in conjunction with any of the arrangements set out above.

In common with the embodiment shown in figure 7, the alternative air-bag 46 has a body part 7 and a head part 11. The front surface 2 includes a protruding region 35, which forms part of the head part 11 and protrudes in a first direction (i.e. generally the direction in which the front face 2 faces). However, the rear surface 47 has a further protruding region 48, which also forms part of the head part 11, and which protrudes in substantially the opposite direction.

In the embodiment shown in figure 11 the front surface is generally vertical in the body region 7, but the rear surface 47 is inclined in the body region, becoming wider towards the bottom surface 4. This is (as mentioned above) to allow the air-bag 46 to have a wide base. However, as can be seen in figure 11, the rear surface 47 protrudes outwardly by a certain amount at the region where the body part 7 joins the head part 11 (indicated by line 49) and the further protruding region 48 protrudes outwardly further than this.

The shape of the rear surface 47 of the air-bag 46 is to provide protection to the occupant of the other seat 28, i.e. the seat which is to the left in figure 11.

This may be necessary if both front seats of the vehicle are occupied during a side impact, or if a "universal" air-bag needs to be provided in a vehicle which may be left- or right-hand drive.

The skilled person will realise that the shape of the rear surface 4 of the further air-bag 46 will allow the shoulder and head of the occupant to be protected, in a similar manner to that shown in figure 8. The rear surface 4 may also include a central chamber and side chambers (not shown), for instance as shown in figures 1 and 2, again to provide protection to an occupant who may be thrown against the rear surface 4 of the further air-bag 46.

In yet further embodiments, the air-bag may be generally vertically symmetrical, i.e. the front and rear surfaces are substantially the same shape. In such embodiments the front and rear surfaces may be generally parallel with each other over the body part.

Prior to deployment, air-bags embodied in the present invention are preferably rolled and/or folded into a compact form, and stored in a housing/soft wrapper of an airbag module. The airbag module is preferably, as discussed above, stored within the seat. It is envisaged that in other embodiments the air-bag module could alternatively be stored in the central console of the vehicle. In these embodiments the air-bag would inflate directly out of the central console. An advantage of such embodiments is that the air-bag could be connected, by one or more tethers or other connections, directly to the central console, thus allowing the air-bag to be fixed rigidly in place with respect to the central console.

On receiving a trigger signal, compressed gas will be introduced rapidly into the interior of the air-bag to inflate the air-bag. This trigger signal may arise, for instance, from an impact sensor provided on a side surface of the vehicle, from one or more accelerometers of the vehicle, from one or more signals from a radar, Lidar or other reflected radiation system, from signals from one or video cameras, of many combinations of these, or from any other appropriate sensors.

As the air-bag inflates, a trapdoor or flap of the air-bag housing/wrapper may be broken open to allow the air-bag to inflate into the main vehicle cabin. Pressurised gas may continue to be introduced into the interior of the air-bag until the air-bag is fully inflated. Any suitable inflator, such as a pyrotechnic inflator, may be used to inflate the air-bag. If necessary, two or more inflators may be used.

In the examples given above the head and body parts are formed from a single cushion which is divided internally using the first and second tether arrangements. However, in other embodiments, the head part may be formed entirely separately from the body part, as a separate cushion, and the head and body parts may subsequently be attached to one another, by sewing or any other suitable means.

The skilled reader will appreciate that air-bags embody the present invention will provide improved and reliable protection for occupants of a vehicle during a side impact event. Air-bags embodying the present invention may also be deployed during other kinds of accidents, for instance during a rollover event.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air-bag (1, 46) to be mounted in a vehicle, the air-bag (1, 46) comprising:
a top side (3), which will be at the top of the air-bag (1, 46) when it is mounted in a vehicle;
a bottom side (4);
a face side (2), extending between the top side (3) and the bottom side (4);
a rear side (34, 47), substantially opposite the face side (2);
a body part (7), defined between the face side (2) and the rear side (34, 47), and positioned adjacent or close to the bottom side (4); and
a head part (11), defined between the face side (2) and the rear side (34, 47) and adjacent to or close to the top side (3), wherein:
the body part (7) is divided into at least two chambers (8, 9) by a first tether arrangement (10) which extends between the face side (2) and the rear side (34, 47) and is connected both to the face side (2) and the rear side (34, 47);
gas may flow between the two or more chambers (8, 9);
gas may flow between the head part (11) and the body part; and
when the air-bag (1, 46) is in an inflated state, the face side (2) extends further in a first direction, which is generally the direction in which the face side (2) faces, in the region of the head part (11) than in the region of the body part (7).

2. An air-bag (1, 46) according to claim 1, wherein the first tether arrangement (10) extends in a direction which passes from the bottom side (4) to the top side (3).

3. An air-bag (1, 46) according to claim 2, wherein the first tether arrangement (10) extends over substantially the entire height of the body part (7), between the bottom side (4) and the top side (3).

4. An air-bag (1, 46) according to any preceding claim, wherein the first tether arrangement (10) comprises a sheet of material (13, 25).

5. An air-bag (1, 46) according to claim 3, wherein the sheet of material (13, 25) has one or more vent apertures (19) formed therethrough.

6. An air-bag (1, 46) according to any preceding claim, comprising two first tether arrangements (10), spaced apart from each other, to divide the body part (7) into three chambers (8, 9), comprising a middle chamber (8), and preferably wherein the two first tether arrangements (10) are substantially parallel with each other.

7. An air-bag (1, 46) according to any preceding claim, further comprising a second tether arrangement (12), which extends between the face side (2) and the rear side (34, 47) and is connected both to the face side (2) and the rear side (34, 47), the second tether arrangement (12) being positioned between the body part (7) and the head part (11).

8. An air-bag (1, 46) according to claim 7, comprising at least two second tether arrangements (12), which are spaced apart from each other.

9. An air-bag (1, 46) according to claim 7 or 8, wherein the or each second tether arrangement (12) comprises a sheet of material (13, 25).

10. An air-bag (1, 46) according to any one of claims 7 to 9, wherein the second tether arrangement (12) extends in a direction which is substantially parallel with the bottom side (4).

11. An air-bag (1, 46) according to any one of claims 7 to 10, wherein the or a first tether arrangement (10) and the or a second tether arrangement (12) are formed from the same tether element.

12. An air-bag (1, 46) according to any preceding claim, further comprising first and second side surfaces (5), which are attached to the top side (3), the bottom side (4), the face side (2) and the rear side (34, 47).

13. A vehicle incorporating an air-bag (1, 46) according to any preceding claim.

14. A vehicle according to claim 13, wherein the air-bag (1, 46) is arranged to inflate to a position between two adjacent seats (27, 28) of the vehicle.

15. A vehicle according to claim 13 or 14, wherein the air-bag (1, 46) is arranged to inflate on a central console (32) between two adjacent seats (27, 28), and wherein the air-bag (1, 46), when inflated, further comprises a skirt portion (40) which extends to cover a part of the central console (32) that faces towards an occupant (29) of one of the seats (27).

## Patentansprüche

1. Airbag (1, 46) zur Montage in einem Fahrzeug, wobei der Airbag (1, 46) umfasst:
eine Oberseite (3), die sich oben am Airbag (1, 46) befindet, wenn dieser in einem Fahrzeug montiert ist;
eine Unterseite (4);
eine Stirnseite (2), die sich zwischen der Oberseite (3) und der Unterseite (4) erstreckt;
eine Rückseite (34, 47), die der Stirnseite (2) im Wesentlichen gegenüberliegt;
einen Körperteil (7), der zwischen der Stirnseite (2) und der Rückseite (34, 47) definiert und neben oder nahe der Unterseite (4) positioniert ist; und
einen Kopfteil (11), der zwischen der Stirnseite (2) und der Rückseite (34, 47) definiert und neben oder nahe der Oberseite (3) liegt, wobei:
der Körperteil (7) durch eine erste Haltegurtanordnung (10), die sich zwischen der Stirnseite (2) und der Rückseite (34, 47) erstreckt und sowohl mit der Stirnseite (2) als auch mit der Rückseite (34, 47) verbunden ist, in mindestens zwei Kammern (8, 9) unterteilt ist;
Gas zwischen den zwei oder mehr Kammern (8, 9) strömen kann;
Gas zwischen dem Kopfteil (11) und dem Körperteil strömen kann; und
wenn sich der Airbag (1, 46) in einem aufgeblasenen Zustand befindet, sich die Stirnseite (2) im Bereich des Kopfteils (11) weiter in eine erste Richtung erstreckt, die im Allgemeinen die Richtung ist, in die die Stirnseite (2) zeigt, als im Bereich des Körperteils (7).

2. Airbag (1, 46) nach Anspruch 1, wobei sich die erste Haltegurtanordnung (10) in eine Richtung erstreckt, die von der Unterseite (4) zur Oberseite (3) verläuft.

3. Airbag (1, 46) nach Anspruch 2, wobei sich die erste Haltegurtanordnung (10) über im Wesentlichen die gesamte Höhe des Körperteils (7) zwischen der Unterseite (4) und der Oberseite (3) erstreckt.

4. Airbag (1, 46) nach einem der vorhergehenden Ansprüche, wobei die erste Haltegurtanordnung (10) eine Materialbahn (13, 25) umfasst.

5. Airbag (1, 46) nach Anspruch 3, wobei die Materialbahn (13, 25) eine oder mehrere durch diese ausgebildete Entlüftungsöffnungen (19) aufweist.

6. Airbag (1, 46) nach einem der vorhergehenden Ansprüche, umfassend zwei voneinander beabstandete erste Haltegurtanordnungen (10), um den Körperteil (7) in drei Kammern (8, 9) zu unterteilen, die eine mittlere Kammer (8) umfassen, und wobei vorzugsweise die zwei ersten Haltegurtanordnungen (10) im Wesentlichen parallel zueinander sind.

7. Airbag (1, 46) nach einem der vorhergehenden Ansprüche, ferner umfassend eine zweite Haltegurtanordnung (12), die sich zwischen der Stirnseite (2) und der Rückseite (34, 47) erstreckt und sowohl mit der Stirnseite (2) als auch mit der Rückseite (34, 47) verbunden ist, wobei die zweite Haltegurtanordnung (12) zwischen dem Körperteil (7) und dem Kopfteil (11) positioniert ist.

8. Airbag (1, 46) nach Anspruch 7, umfassend mindestens zwei zweite Haltegurtanordnungen (12), die voneinander beabstandet sind.

9. Airbag (1, 46) nach Anspruch 7 oder 8, wobei die oder jede zweite Haltegurtanordnung (12) eine Materialbahn (13, 25) umfasst.

10. Airbag (1, 46) nach einem der Ansprüche 7 bis 9, wobei sich die zweite Haltegurtanordnung (12) in eine Richtung erstreckt, die im Wesentlichen parallel zur Unterseite (4) ist.

11. Airbag (1, 46) nach einem der Ansprüche 7 bis 10, wobei die oder eine erste Haltegurtanordnung (10) und die oder eine zweite Haltegurtanordnung (12) aus demselben Haltegurtelement gebildet sind.

12. Airbag (1, 46) nach einem der vorhergehenden Ansprüche, ferner umfassend eine erste und eine zweite Seitenfläche (5), die an der Oberseite (3), der Unterseite (4), der Stirnseite (2) und der Rückseite (34, 47) angebracht sind.

13. Fahrzeug, das einen Airbag (1, 46) nach einem der vorhergehenden Ansprüche enthält.

14. Fahrzeug nach Anspruch 13, wobei der Airbag (1, 46) so angeordnet ist, dass er sich in eine Position zwischen zwei benachbarten Sitzen (27, 28) des Fahrzeugs aufbläst.

15. Fahrzeug nach Anspruch 13 oder 14, wobei der Airbag (1, 46) so angeordnet ist, dass er sich auf einer Mittelkonsole (32) zwischen zwei benachbarten Sitzen (27, 28) aufbläst, und wobei der Airbag (1, 46) im aufgeblasenen Zustand ferner einen Schürzenabschnitt (40) umfasst, der sich so erstreckt, dass er einen Teil der Mittelkonsole (32) bedeckt, der einem Fahrgast (29) eines der Sitze (27) zugewandt ist.

## Revendications

1. Coussin de sécurité gonflable (1, 46) destiné à être monté dans un véhicule, le coussin de sécurité gonflable (1, 46) comprenant :
un côté supérieur (3), qui sera au niveau du sommet du coussin de sécurité gonflable (1, 46) lorsqu'il est monté dans un véhicule ;
un côté inférieur (4) ;
un côté latéral (2), s'étendant entre le côté supérieur (3) et le côté inférieur (4) ;
un côté arrière (34, 47), sensiblement opposé au côté latéral (2) ;
une partie de corps (7), définie entre le côté latéral (2) et le côté arrière (34, 47), et positionnée de manière adjacente ou proche du côté inférieur (4) ; et
une partie de tête (11), définie entre le côté latéral (2) et le côté arrière (34, 47) et adjacente ou proche du côté supérieur (3), dans lequel :
la partie de corps (7) est divisée en au moins deux chambres (8, 9) par un premier agencement d'attache (10) qui s'étend entre le côté latéral (2) et le côté arrière (34, 47) et est relié à la fois au côté latéral (2) et au côté arrière (34, 47) ;
du gaz peut s'écouler entre les deux ou plusieurs chambres (8, 9) ;
du gaz peut s'écouler entre la partie de tête (11) et la partie de corps ; et
lorsque le coussin de sécurité gonflable (1, 46) est à l'état gonflé, le côté latéral (2) s'étend davantage dans une première direction, qui est généralement la direction à laquelle le côté latéral (2) fait face, au niveau de la partie de tête (11) plutôt qu'au niveau de la partie de corps (7).

2. Coussin de sécurité gonflable (1, 46) selon la revendication 1, dans lequel le premier agencement d'attache (10) s'étend dans une direction qui passe du côté inférieur (4) au côté supérieur (3).

3. Coussin de sécurité gonflable (1, 46) selon la revendication 2, dans lequel le premier agencement d'attache (10) s'étend de manière considérable sur toute la taille de la partie de corps (7), entre le côté inférieur (4) et le côté supérieur (3).

4. Coussin de sécurité gonflable (1, 46) selon l'une quelconque des revendications précédentes, dans lequel le premier agencement d'attache (10) comprend une feuille de matériau (13, 25).

5. Coussin de sécurité gonflable (1, 46) selon la revendication 3, dans lequel la feuille de matériau (13, 25) présente une ou plusieurs ouvertures d'aération (19) formées à travers celle-ci.

6. Coussin de sécurité gonflable (1, 46) selon l'une quelconque des revendications précédentes, comprenant deux premiers agencements d'attache (10), espacés l'un de l'autre, pour diviser la partie de corps (7) en trois chambres (8, 9), comprenant une chambre intermédiaire (8), et de préférence dans laquelle les deux premiers agencements d'attache (10) sont sensiblement parallèles l'un à l'autre.

7. Coussin de sécurité gonflable (1, 46) selon l'une quelconque des revendications précédentes, comprenant en outre un second agencement d'attache (12), qui s'étend entre le côté latéral (2) et le côté arrière (34, 47) et qui est relié à la fois au côté latéral (2) et au côté arrière (34, 47), le second agencement d'attache (12) étant positionné entre la partie de corps (7) et la partie de tête (11).

8. Coussin de sécurité gonflable (1, 46) selon la revendication 7, comprenant au moins deux seconds agencements d'attache (12), qui sont espacés l'un de l'autre.

9. Coussin de sécurité gonflable (1, 46) selon la revendication 7 ou 8, dans lequel le ou chaque second agencement d'attache (12) comprend une feuille de matériau (13, 25).

10. Coussin de sécurité gonflable (1, 46) selon l'une quelconque des revendications 7 à 9, dans lequel le second agencement d'attache (12) s'étend dans une direction qui est sensiblement parallèle au côté inférieur (4).

11. Coussin de sécurité gonflable (1, 46) selon l'une quelconque des revendications 7 à 10, dans lequel le ou un premier agencement d'attache (10) et le ou un second agencement d'attache (12) sont formés à partir du même élément d'attache.

12. Coussin de sécurité gonflable (1, 46) selon l'une quelconque des revendications précédentes, comprenant en outre les première et seconde surfaces latérales (5), qui sont fixées au côté supérieur (3), au côté inférieur (4), au côté latéral (2) et la côté arrière (34, 47).

13. Véhicule comprenant un coussin de sécurité gonflable (1, 46) selon l'une quelconque des revendications précédentes.

14. Véhicule selon la revendication 13, dans lequel le coussin de sécurité gonflable (1, 46) est conçu pour gonfler jusqu'à une position entre deux sièges adjacents (27, 28) du véhicule.

15. Véhicule selon la revendication 13 ou 14, dans lequel le coussin de sécurité gonflable (1, 46) est conçu pour gonfler sur une console centrale (32) entre deux sièges adjacents (27, 28) et dans lequel le coussin de sécurité gonflable (1, 46), lorsqu'il est gonflé, comprend en outre une partie de jupe (40) qui s'étend pour couvrir une partie de la console centrale (32) qui fait face à un occupant (29) de l'un des sièges (27).
